Europäisches Patentamt

**European Patent Office**

**Office européen des brevets**

(19)

(11) Veröffentlichungsnummer: **0 040 595**
**B1**

(12) EUROPÄISCHE PATENTSCHRIFT

(45) Veröffentlichungstag der Patentschrift:
14.03.84

(21) Anmeldenummer: 81890081.3

(22) Anmeldetag: 19.05.81

(51) Int. Cl.³: **A 62 C 27/04,** F 04 D 15/00

(54) Feuerlöschkreiselpumpe.

(30) Priorität: 20.05.80 AT 2676/80

(43) Veröffentlichungstag der Anmeldung:
25.11.81 Patentblatt 81/47

(45) Bekanntmachung des Hinweises auf die Patenterteilung:
14.03.84 Patentblatt 84/11

(84) Benannte Vertragsstaaten:
DE FR GB SE

(56) Entgegenhaltungen:
DE - A - 2 722 237
DE - B - 1 111 023
DE - U - 1 779 298
GB - A - 1 376 622
US - A - 3 544 235
US - A - 3 786 869
US - A - 3 981 618

(73) Patentinhaber: **Konrad Rosenbauer K.G.,
Paschingerstrasse 90, A-4060 Leonding (AT)**

(72) Erfinder: **Güttler, Ernst, Dipl.-Ing., Hackstrasse 12,
A-4060 Leonding (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Feuerlöschkreiselpumpe

Die Erfindung betrifft eine Feuerlöschkreiselpumpe mit einer Druckregelungseinrichtung, die in Abhängigkeit vom Förderdruck der Pumpe über ein Verstellgestänge die Drehzahl des Pumpenmotors ändert und die ein Steuergerät und einen dem Verstellgestänge zugeordneten Stellmotor aufweist, wobei das Steuergerät in Abgleichur.g des von einem Druckgeber gelieferten Förderdruck-Istwertes mit einem vorwählbaren Förderdruck-Sollwertbereich den Stellmotor bei einem Istwert unterhalb des Sollwertbereiches im Sinne einer Drehzahlsteigerung und bei einem Istwert oberhalb dieses Sollwertbereiches im Sinne einer Drehzahlsenkung ansteuert.

Bei Löscheinsätzen ist es besonders wichtig, den Förderdruck der Feuerlöschkreiselpumpe je nach Art der Pumpe bzw. des Löschangriffes auf einen bestimmten Wert zu bringen und während des Pumpenbetriebes auch auf diesem Förderdruckwert zu halten, was durch entsprechende Änderung der Antriebsdrehzahl erfolgt. Zusätzlich zu dieser Förderdrucküberwachung ist es notwendig, die Pumpe vor Kavitation zu schützen, die durch mangelnde Wasserversorgung oder auch durch eine zu große Wasserentnahme u. dgl. entstehen kann.

Gemäß der DE-A- 2 722 237 gibt es zwar bereits zur automatischen Steuerung des Pumpenförderdruckes eine Vorrichtung mit eigenem Stellmotor zur Drehzahländerung des Pumpenmotors sowie Sollwertgeber und Istwertgeber für den Förderdruck, welche Vorrichtung die Pumpenmotordrehzahl je nach den Spannungswerten zwischen dem Druckmeßglied an der Pumpenförderseite und dem Sollwertgeber steuert, wodurch beim Auftreten von Druckänderungen die Leistung des Pumpenmotors auf den vorgegebenen Sollwert einstellbar ist, doch kann damit Kavitation nicht erfaßt werden. Aus der US-A- 3 544 235 wiederum geht ein Druckregler als bekannt hervor, der über einen einerseits vom Pumpenförderdruck, andererseits von einem bestimmten, in einem Druckspeicher aufgebauten Vorwahldruck beaufschlagbaren Steuerkolben das Verstellgestänge des Pumpenmotors im Maße des Druckunterschiedes zwischen Förderdruck und Vorwahldruck betätigt. Durch die Notwendigkeit, den Vorwahldruck vorerst durch händische Motorverstellung aufbauen zu müssen, ergeben sich hier recht komplizierte Vorbereitungsarbeiten für diese Druckregelung, die außerdem auf kleinste Druckdifferenzen in unnötiger Weise reagiert und eine gewisse Instabilität der Steuerung mit sich bringt. Allerdings erlaubt dieser Druckregler einen gewissen Kavitationsschutz, der jedoch recht ungenügend bleiben muß, da der Regler Kavitation erst bei Auftreten sehr großer Druckverluste erkennt und dann zwangsweise den Antriebsmotor auf Leerlaufdrehzahl zurücksteuert. Ist durch Kavitation der Druckabfall nur gering oder tritt sie während der Einstellung des Vorwahldruckes auf, spricht der Druckregler überhaupt nicht an, und stellt sich Kavitation erst bei höheren Absolutdrucken ein, kann der Druckregler ebenfalls nicht reagieren, da die Vorspannung einer Feder für die Erkennung der Kavitation maßgebend ist und diese Feder bei hohem Druckniveau auch durch einen entsprechenden Druckabfall nicht wirksam werden kann. Dazu kommt noch, daß bei erkannter Kavitation die Pumpe durch die Rückstellung des Motors auf Leerlaufdrehzahl praktisch außer Funktion gesetzt wird und dem Feuerwehrmann daher von vornherein die Möglichkeit genommen ist, ohne Rücksicht auf die Lebensdauer der Pumpe vielleicht notwendige Rettungsmaßnahmen zu setzen und während des Pumpenbetriebes entsprechende Maßnahmen zum Beseitigen der Kavitation ergreifen zu können.

Der Erfindung liegt daher die Aufgabe zugrunde, diese Mängel zu beseitigen und eine Feuerlöschkreiselpumpe der eingangs geschilderten Art zu schaffen, die auf Grund ihrer Druckregelungseinrichtung nicht nur einen vollautomatischen Betrieb erlaubt, sondern vor allem auch auftretende Kavitation sofort sicher erkennt und sie in feuerwehrtechnisch sinnvoller Weise zu beseitigen ermöglicht.

Zur Lösung dieser Aufgabe ist erfindungsgemäß ein dem Steuergerät die Pumpendrehzahl einspeisender Drehzahlgeber vorgesehen, und das Steuergerät vergleicht den dieser Drehzahl entsprechend dem Pumpenkennlinienfeld zugeordneten Förderdruck-Normalwert mit dem Förderdruck-Istwert, wobei eine bestimmte Abweichung des Istwertes vom Normalwert eine Signaleinrichtung auslöst und/oder den Stellmotor im Sinne einer Drehzahlsenkung einsetzt. Um auf Kavitation richtig reagieren zu können, muß die Regelungseinrichtung diese auch erkennen, wozu es sicher nicht genügt, wenn wie bisher nur extrem starker Druckabfall als Zeichen für das Auftreten von Kavitation heranziehbar ist. Kavitation kann ja bereits beim Anfahren des vorgewählten Förderdruckes entstehen, sie kann aber auch eintreten, wenn durch einen zusätzlich eingeschalteten Verbraucher die von der Pumpe gerade noch ohne Kavitation bewältigbare Fördermenge überschritten wird. Um daher auf jeden Fall Kavitation aufzuzeigen, muß auch geringster Druckabfall erkannt werden, wofür nun das Verhalten der Druckregelungseinrichtung selbst als Parameter herangezogen wird. Erreicht nämlich der Förderdruck nicht den eingestellten Wert, wird über den Stellmotor die Drehzahl gesteigert. Bei Auftreten von Kavitation ergibt dies aber keine gleichwertige Drucksteigerung, was das Steuergerät als Erkennungsmerkmal für Kavitation erfaßt. Für das Steuergerät ist daher Kavitation dann gegeben, wenn der bei der entsprechenden Antriebsdrehzahl gemäß dem Pumpenkennlinienfeld zugeordnete Normalwert des Förderdruckes nicht erreicht wird, sondern der Förderdruck-Istwert unterhalb die-

ses Normalwertes bleibt. Ist die Kavitation so von der Druckregelungseinrichtung erkannt, wird ein optisches oder akustisches Signal ausgelöst, um dem Feuerwehrmann die Möglichkeit zu geben, ohne die Löscharbeiten zu unterbrechen, Maßnahmen zur Kavitationsbeseitigung ergreifen zu können. Zusätzlich kann auch automatisch der Stellmotor die Antriebsdrehzahl senken, um auf diese Weise aus der Kavitation herauszukommen, welcher Weg bei einem Feuerwehreinsatz aber nicht immer optimal ist, da oft das zu rettende Gut einen größeren Wert als die Pumpe darstellt.

Eine besonders einfache Ausgestaltung der Erfindung ergibt sich, wenn das Steuergerät nur die bei maximaler Pumpendrehzahl herrschenden Druckverhältnisse erfaßt, wobei vorzugsweise für die maximale Drehzahl die entsprechende Endlage des Stellmotors und für die Druckverhältnisse ein auf den erforderlichen Förderdruck-Normalwert eingestellter Druckschalter maßgebend sind. Dem Steuergerät braucht also nicht das gesamte Kennlinienfeld der Kreiselpumpe eingespeichert zu werden, sondern es wird abgewartet, bis die Regelungseinrichtung automatisch auf die maximale Motordrehzahl geregelt hat. Wird der zu dieser maximalen Drehzahl gehörende Förderdruck-Normalwert nicht erreicht, ergibt sich das gesuchte Kavitationsmerkmal. Konstruktiv einfach läßt sich dies dadurch verwirklichen, daß einerseits ein am entsprechenden oberen Totpunkt des Stellmotors vorgesehener Endschalter das Erreichen der maximalen Drehzahl signalisiert und anderseits ein auf den jeweiligen Pumpentypus eingestellter Druckschalter das Nichterreichen des Förderdruck-Normalwertes anzeigt.

Um außerdem Mißdeutungen beim Auftreten von Druckabweichungen vermeiden und die Möglichkeit berücksichtigen zu können, daß nicht Kavitation vorliegt, sondern Luft in die Saugleitung eingedrungen ist, was ebenfalls zu Drucksendungen führt und trotz Drehzahlerhöhung nicht den Normalwert des Förderdruckes entstehen läßt, ist erfindungsgemäß in der Pumpensaug- oder -druckleitung ein Strömungswächter od. dgl. eingebaut, der bei fehlender Strömung ein Auslösen der Signaleinrichtung und/oder einen Einsatz des Stellmotors auf Grund einer Abweichung des Förderdruck-Istwertes vom Förderdruck-Normalwert unterbindet. Spricht nämlich dieser Strömungswächter an, ist keinesfalls Wassermangel gegeben, da ja Strömung vorliegt, und der Druckabfall ist ausschließlich auf Kavitation zurückzuführen. Ist aus Gründen abgeschlossener Druckleitungen keine Strömung vorhanden, würde zwar der Strömungswächter nicht ansprechen, doch wird bei Wasserfüllung der Pumpe in diesem Fall der gewünschte Druck sicher erreicht werden, d. h. Kavitation kann bei diesen Betriebsverhältnissen ohnehin nicht auftreten, so daß es keine Fehlanzeigen mehr gibt.

Erfindungsgemäß kann als Strömungswächter ein auf einen niederen, etwa dem inneren Widerstand der Pumpenanlage entsprechenden Druck, z. B. 2 bar eingestellter Druckschalter in der Pumpendruckleitung dienen. Da Kavitation erst bei einem Druck auftritt, der größer ist als der innere Widerstand der Pumpenanlage, reicht es vollkommen aus, einen echten Strömungswächter durch einen derartigen Druckschalter zu ersetzen.

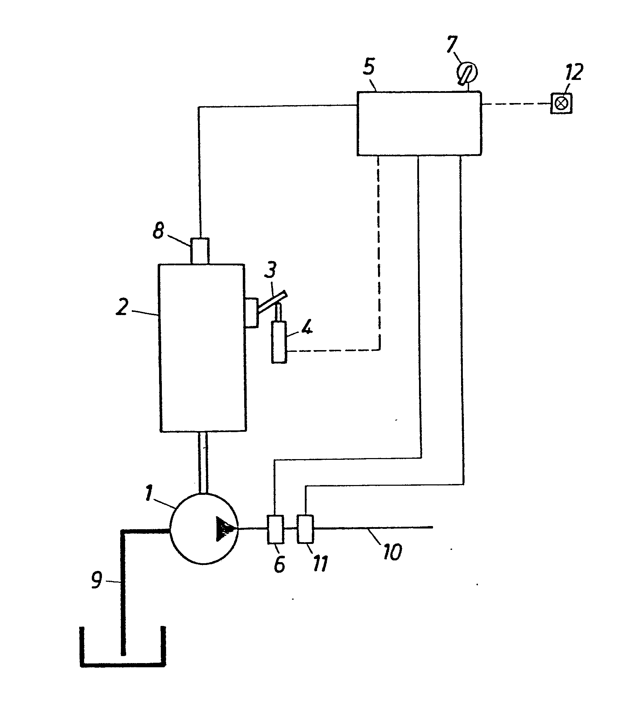

In der Zeichnung ist der Erfindungsgegenstand beispielsweise in einem reinen Schaltschema veranschaulicht.

Eine Feuerlöschkreiselpumpe 1 wird mittels eines Motors 2 angetrieben, dessen Drehzahl über ein Verstellgestänge 3 oder eine andere Verstelleinrichtung variiert werden kann. Der Verstelleinrichtung 3 ist ein Stellmotor 4 zugeordnet, der über ein elektronisches Steuergerät 5 in Abhängigkeit vom Förderdruck der Pumpe 1 ansteuerbar ist. Ein Druckgeber 6 liefert dazu dem Steuergerät 5 den Förderdruck-Istwert, und das Steuergerät 5 vergleicht nun diesen Istwert mit dem über einen an ein Potentiometer od. dgl. angeschlossenen Drehschalter 7 vorwählbaren Förderdruck-Sollwertbereich. Liegt der Istwert unterhalb des Sollwertbereiches, wird der Stellmotor 4 im Sinne einer Drehzahlerhöhung, und liegt der Istwert oberhalb des Sollwertbereiches, wird der Stellmotor 4 im Sinne einer Drehzahlsenkung angesteuert, wodurch der Förderdruck der Pumpe auf einem innerhalb des gewählten Sollwertbereiches liegenden Wert gehalten wird.

Um eventuell auftretende Kavitation erkennen zu können, ist ein Drehzahlgeber 8 vorgesehen, der dem Steuergerät 5 die Pumpendrehzahl eingibt. In das Steuergerät 5 ist nun zusätzlich das der Kreiselpumpe 1 zugehörige Pumpenkennlinienfeld eingespeichert, so daß der jeder Pumpendrehzahl zugeordnete Förderdruck-Normalwert mit dem Förderdruck-Istwert, der ja durch den Druckgeber 6 dem Steuergerät 5 zugeleitet wird, verglichen werden kann. So stellt eine auftretende Abweichung des Istwertes vom Normalwert ein Zeichen für Druckverhältnisse dar, die nicht von der Pumpendrehzahl abhängen. Eine solche Druckabweichung kann nun durch Kavitation oder durch Eintreten von Luft in die Ansaugleitung 9 der Kreiselpumpe 1 hervorgerufen werden, und da es um ein Erkennen von Kavitation geht, ist in die Pumpendruckleitung 10 ein Strömungswächter 11 eingebaut, der dem Steuergerät 5 mitteilt, ob Strömung vorliegt, also die Pumpe 1 ordnungsgemäß arbeitet. Ein solches ordnungsgemäßes Arbeiten der Pumpe kommt nicht zustande, wenn Luft in der Saugleitung 9 ist, so daß ein Ansprechen des Strömungswächters 11 ein Merkmal dafür ist, daß der auftretende Druckabfall nur durch Kavitation bedingt sein kann. Aufgrund dieser Information erkennt das Steuergerät 5 eindeutig das Auftreten von Kavitation und löst sofort zur Warnung eine Signaleinrichtung 12 aus. Der Feuerwehrmann kann nun, ohne den Löschvorgang unterbrechen zu müssen, entsprechende Maßnahmen zur Beseitigung der Kavitation ergreifen, wobei gleichzeitig mit der Signaleinrichtung 12, aber auch statt dieser vom Steuergerät 5 automatisch der Stellmotor 4 im Sinne einer Drehzahlsenkung eingesetzt werden könnte.

**Patentansprüche:**

1. Feuerlöschkreiselpumpe (1) mit einer Druckregelungseinrichtung, die in Abhängigkeit vom Förderdruck der Pumpe (1) über ein Verstellgestänge (3) die Drehzahl des Pumpenmotors (2) ändert und die ein Steuergerät (5) und einen dem Verstellgestänge (3) zugeordneten Stellmotor (4) aufweist, wobei das Steuergerät (5) in Abgleichung des von einem Druckgeber (6) gelieferten Förderdruck-Istwertes mit einem vorwählbaren Förderdruck-Sollwertbereich den Stellmotor (4) bei einem Istwert unterhalb des Sollwertbereiches im Sinne einer Drehzahlsteigerung und bei einem Istwert oberhalb dieses Sollwertbereiches im Sinne einer Drehzahlsenkung ansteuert, dadurch gekennzeichnet, daß ein dem Steuergerät (5) die Pumpendrehzahl einspeisender Drehzahlgeber (8) vorgesehen ist und das Steuergerät (5) den dieser Drehzahl entsprechend dem Pumpenkennlinienfeld zugeordneten Förderdruck-Normalwert mit dem Förderdruck-Istwert vergleicht, wobei eine bestimmte Abweichung des Istwertes vom Normalwert eine Signaleinrichtung (12) auslöst und/oder den Stellmotor (4) im Sinne einer Drehzahlsenkung einsetzt.

2. Feuerlöschkreiselpumpe nach Anspruch 1, dadurch gekennzeichnet, daß das Steuergerät (5) nur die bei maximaler Pumpendrehzahl herrschenden Druckverhältnisse erfaßt, wobei vorzugsweise für die maximale Drehzahl die entsprechende Endlage des Stellmotors (4) und für die Druckverhältnisse ein auf den erforderlichen Förderdruck-Normalwert eingestellter Druckschalter maßgebend sind.

3. Feuerlöschkreiselpumpe nach Anspruch 1 oder 2, dadurch gekennzeichnet, daß in der Pumpensaug- oder -druckleitung (9, 10) ein Strömungswächter (11) od. dgl. eingebaut ist, der bei fehlender Strömung ein Auslösen der Signaleinrichtung (12) und/oder einen Einsatz des Stellmotors (4) auf Grund einer Abweichung des Förderdruck-Istwertes vom Förderdruck-Normalwert unterbindet.

4. Feuerlöschkreiselpumpe nach Anspruch 3, dadurch gekennzeichnet, daß als Strömungswächter (11) ein auf einen niederen, etwa dem inneren Widerstand der Pumpenanlage entsprechenden Druck, z. B. 2 bar, eingestellter Druckschalter in der Pumpendruckleitung (10) dient.

**Claims**

1. A fire-fighting centrifugal pump comprising a pressure control system which in dependence on the discharge pressure of the pump (1) changes the speed of the pump motor (2) by means of an adjusting linkage (3) and which comprises a controller (5) and a servomotor (4) associated with the adjusting linkage, said controller (5) tending to adjust an actual discharge pressure measured by a pressure sensor (6) into a preselectable desired discharge pressure range in that the servomotor (4) is operated in the sense of a speed increase in response to an actual pressure below the desired pressure range and in the sense of a speed decrease in response to an actual pressure above that desired pressure range, characterized in that a speed sensor (8) is provided, which delivers a signal representing the pump speed to the controller (5), the controller compares the normal discharge pressure associated with that speed according to the family of characteristic curves of the pump with the actual discharge pressure and a predetermined deviation of the actual pressure from the normal pressure initiates the operation of a signal device (12) and/or initiates the operation of the servomotor (4) in the sense of a speed decrease.

2. A fire-fighting centrifugal pump according to claim 1, characterized in that the controller (5) is responsive only to the pressure conditions obtained at the maximum pump speed, the corresponding end position of the servomotor (4) is preferably used to indicate the maximum speed and a pressure switch set to the required normal discharge pressure is preferably used to indicate the pressure conditions.

3. A fire-fighting centrifugal pump according to claim 1 or 2, characterized in that a flow detector (11) or the like is incorporated in the suction or pressure conduit (9, 10) of the pump and inhibits an initiation of the operation of the signalling device (12) and/or of the servomotor (4) in response to a deviation of the actual discharge pressure form the normal discharge pressure when there is no flow.

4. A fire-fighting refractory pump according to claim 3, characterized in that the flow detector (11) consists of a pressure switch which is incorporated in the discharge conduit (10) of the pump and is set to a lower pressure, which corresponds approximately to the internal resistance of the pump plant and amounts, e.g., to 2 bars.

**Revendications**

1. Pompe à incendie centrifuge (1) comportant un dispositif de régulation de pression qui, sous la dépendance de la pression de refoulement de la pompe (1), fait varier la vitesse de rotation du moteur (2) de la pompe par l'intermédiaire d'un tringlage de réglage et qui présente un appareil de commande (5) et un servomoteur (4) adjoint au tringlage de réglage (3), et où l'appareil de commande (5), pour adapter la valeur instantanée de pression de refoulement, fournie par un transmetteur de pression (6), à une gamme de valeurs de consigne de pression de refoulement qui peut être choisie à l'avance, pilote le servomoteur dans le sens d'une augmentation de la

**0 040 595**

vitesse de rotation dans le cas d'une valeur instantanée inférieure à la gamme de valeurs de consigne et dans le sens d'une diminution de la vitesse de rotation dans le cas d'une valeur instantanée supérieure à cette gamme de valeurs de consigne, caractérisée par le fait qu'il est prévu un transmetteur (8) de vitesse de rotation introduisant la vitesse de rotation de la pompe et que l'appareil de commande (5) compare la valeur normale de pression de refoulement correspondant à cette vitesse de rotation conformément au réseau de caractéristiques de la pompe à la valeur instantanée de pression de refoulement, un écart déterminé de la valeur instantanée relativement à la valeur normale déclenchant un dispositif de signalisation (12) et/ou mettant en action le servomoteur (4) dans le sens d'une diminution de la vitesse de rotation.

2. Pompe à incendie centrifuge selon la revendication 1, caractérisée par le fait que l'appareil de commande (5) détecte seulement les conditions de pression qui régnent à la vitesse maximale de rotation de la pompe, la position finale correspondante du servomoteur (4) étant, de préférence, déterminante pour la vitesse maximale de rotation et un interrupteur manométrique, réglé à la valeur normale nécessaire de la pression de refoulement, étant de préférence déterminant pour les conditions de pression.

3. Pompe à incendie centrifuge selon l'une des revendications 1 et 2, caractérisé par le fait que dans le tuyau d'aspiration ou de refoulement (9, 10) de la pompe est installé un contrôleur d'écoulement (11) ou organe similaire qui, en cas d'absence d'écoulement, inhibe le déclenchement du dispositif de signalisation (12) et/ou la mise en action du servomoteur (4) en vertu d'un écart de la valeur instantanée de la pression de refoulement relativement à la valeur normale de la pression de refoulement.

4. Pompe à incendie centrifuge selon la revendication 3, caractérisée kpar le fait que le contrôleur d'écoulement (11) utilisé est un interrupteur manométrique placé dans le tuyau de refoulement (10) de la pompe et réglé à une basse pression correspondant à peu prés à la résistance interne de l'installation de pompe, par exemple 2 bar.